Europäisches Patentamt

European Patent Office

Office européen des brevets

(19)

(11) Publication number: **0 270 764 B1**

## EUROPEAN PATENT SPECIFICATION

(12)

(45) Date of publication of patent specification: **18.12.91**

(51) Int. Cl.⁵: **A23B 7/148, B65D 81/20**

(21) Application number: **87114588.4**

(22) Date of filing: **06.10.87**

(54) Container providing controlled atmospheric storage.

(30) Priority: **06.10.86 US 915836**
**13.04.87 US 37657**

(73) Proprietor: **HERCULES INCORPORATED**
**Hercules Plaza**
**Wilmington Delaware 19894(US)**

(43) Date of publication of application:
**15.06.88 Bulletin 88/24**

(72) Inventor: **Anderson II, Harry Sutton**
**10 Fieldstone Circle Mendenhall Village**
**Hockessin Delaware 19707(US)**

(45) Publication of the grant of the patent:
**18.12.91 Bulletin 91/51**

(84) Designated Contracting States:
**BE CH DE ES FR GB IT LI LU NL SE**

(74) Representative: **Lederer, Franz, Dr. et al**
**Lederer, Keller & Riederer Patentanwälte**
**Lucile-Grahn-Strasse 22**
**W-8000 München 80(DE)**

(56) References cited:
**EP-A- 0 202 179      AU-A- 487 335**
**FR-A- 1 577 718      FR-A- 2 005 440**
**FR-A- 2 033 541      GB-A- 1 071 586**
**US-A- 2 994 424      US-A- 3 320 697**
**US-A- 4 256 770**

**CHIMIE & INDUSTRIE - GENIE CHIMIQUE, vol.
104, no. 17, October 1971, pages 2141-2148;
P. MARCELLIN: "La conservation des fruits
en atmoshpère contrôlée au moyen
d'emballages de matière plastique"**

## Description

This invention relates to the controlled atmospheric storage of fresh fruits and vegetables, and specifically to a method of packaging, and a package, that controls the atmosphere surrounding the packaged fruit or vegetable product to improve retention of product freshness.

Maintaining the flavor, texture and eating qualities of fresh fruits and vegetables, and extending the shelf life of flowers (hereinafter "produce" collectively) from the time of harvest through the time of consumption is an obvious problem. The most commonly used technique has been refrigeration. Some items, such as tomatoes, bananas and citrus fruits, are routinely picked in a less-than-ripe condition and stored at reduced temperatures until they are sold. Other products, such as grapes and lettuce, are picked at maturity and refrigerated. The reduced temperature helps to retard further ripening, but only for relatively short time periods and may be detrimental to the keeping quality of the product after it is exposed to room temperature.

The maturation of produce is a complex series of biochemical and developmental changes. Among the most import processes is respiration, which generally takes place according to the equation:

$$(CH_2O)_n + nO_2 \rightarrow nCO_2 + nH_2O + heat$$

wherein $(CH_2O)_n$ represents a carbohydrate molecule that is oxidized as the produce respires during maturation on storage.

For each produce type there is an optimum range of concentrations of $CO_2$ and $O_2$ at which its respiration is retarded and quality is improved to the greatest extent. For instance, some produce benefit from relatively high levels of $CO_2$, e.g., strawberries and mushrooms, while others such as lettuce and tomatoes, store better at lower levels of $CO_2$.

Likewise each produce type also has its own individual respiration rate, which can be expressed as cubic centimeters of oxygen per kg/hour.

It is known that the maturation-rate of produce can be reduced by controlling the atmosphere surrounding the produce so that an optimum $O_2$ range and relative concentrations of $CO_2$ to $O_2$ is maintained. For instance, U.S. Patent 3,102,777 suggests storage of produce in a container in which the atmosphere is continuously replenished to maintain a higher level of carbon dioxide than that in air. U.S. Patent No. 3,450,542 suggests packaging produce (bananas) in bags of polyethylene film that has a greater permeability to carbon dioxide than to oxygen (3.81mm (150 mil) polyethylene) ; the volume of air in the package is reduced to leave relatively little oxygen and an appropriate balance between the $CO_2$ produced and $O_2$ consumed by the produce and the relative flows of the two gases through the film is produced and maintained for an appropriate storage period (up to about 28 days). However it is a serious disadvantage that the fixed ratios of permeability involved limit the control of the atmospheric composition.

The published paper "Controlling Atmosphere in a Fresh-Fruit Package" by P. Veeraju and M. Karel, Modern Packaging, Vol. 40, #2 (1966) pages 169-172, 254, partly overcomes that limitation by using variable-sized panels of polyethylene or permeable parchment paper in the walls of an otherwise impermeable package to establish a controlled atmosphere, and shows experimentally-derived calculations to determine the panel sizes that are appropriate for different respiration rates of produce. However, predictable areas of panels based on known respiration rates had to be replaced by variable values calculated for individual situations, and problems were encountered with the use of film, requiring excessive areas of permeable panels (over 258 cm² (40 in²)) or the use of paper, which is undesirably wettable.

In the publication of P. Marcellin "La conservation des fruits en atmosphère contrôlée au moyen d'emballages de matière plastique", Chimie et Industrie-Genie Chimique Vol 104, (1971) p. 2141-2148, the use of bags with diffusion windows is proposed. Said diffusion window is formed by a fabric of nylon covered with a thin and continuous layer of silicone elastomer. It is not thought to use different films for different respiration rates.

As indicated, the most advanced known controlled atmosphere storage techniques are not entirely satisfactory. There is a need for containers for packaging produce in which the atmosphere can be predictably controlled at approximately the point required to retard the ripening process and retain product freshness, while permitting the use of panels having an area of the order of 25.8 cm² (4 in²) or less, which can easily be so situated that they are not likely to be blocked by other containers in stacking or handling. The area and permeance required are independently and directly dependent on the weight of produce enclosed.

In the following description and claims, the units applied to the terms used in reference to the flow of a particular gas through a film are "flux", expressed as cm³/day, and "permeance" expressed as cm³/m²-day-atmosphere. The "permeability constant" of a particular film is expressed as $cm^3$-$mm/m^2$-day-atmosphere. (The values are converted from U.S. usage, from which mils and 100 $in^2$ are replaced by mm and $m^2$ to give the above units. In the pressure units, one atmosphere is 101,325 Pa; they define the partial pressure differences or permeation "driving forces" on opposite sides of the film involving the $CO_2$ or $O_2$ gases involved).

Permeance is measured with an apparatus that employs gas pressure ranging from 6.895 to 206.9 kPa (1 to 30 psi) as the driving force and a mass flow meter to measure the gas flow or flux through the membrane.

According to the invention a container capable of creating within it a preselected carbon dioxide and oxygen concentration in the presence of respiring fresh fruit, vegetables or flowers, that is constructed of a substantially gas-impermeable material having a gas-permeable panel in one or more its walls to provide a controlled flow or flux of $CO_2$ and $O_2$ through its walls, is characterized in that the panel is a microporous plastic membrane having an oxygen permeance between about 77,500 and 465,000,000 $cm^3/m^2$-day-atmosphere (5,000 and 30,000,000 $cm^3/100in^2$-day-atmosphere), the permeance and area of the membrane being such as to provide a flux of $O_2$ approximately equal to the actual $O_2$ respiration rate of the enclosed fruit, vegetable or flower, and the carbon dioxide permeance of the membrane being such as to maintain the desired optimum ranges of carbon dioxide and oxygen wherein the selected film has a permeability sufficient to allow the type of control of the atmosphere required.

Preferably, in a container according to the invention, the gas-permeable panel is a microporous propylene polymer film having a flux between about 310,000 and 13,950,000 $cm^3/m^2$-day-atmosphere (20,000 and 900,000 $cm^3/100$ $in^2$-day-atmosphere) for produce weights in the normal range for retail packaging (less than one kg). For normal institutional or food-service packaging with higher unit produce weights, the area and permeance of the panel can be increased as required.

More preferably, in a container according to the invention, to predictably control the atmosphere surrounding the packaged fruit or vegetable product, the permeance and area of the membrane is such as to provide a flux of $O_2$ approximately equal to the predicted $O_2$ respiration rate of not more than 1.5 kg of enclosed fruit, vegetable or flower, and the carbon dioxide permeance of the membrane being such as to maintain the desired optimum ranges of carbon dioxide and oxygen for not more than the said 1.5 kg of enclosed produce.

Also more preferably, in a container according to the invention, the microporous membrane is an oriented film comprised of a blend of a propylene homopolymer and a propylene-ethylene copolymer having an ethylene-moiety concentration of 2 to 5% by weight, the film being filled with 40 to 60% calcium carbonate, based on the total weight of the film.

In the attached drawings, in which the same reference characters designate the same elements in the different figures:

Figure 1 is a perspective view of a container having a panel according to this invention;

Figure 2 is a plan view of the same container;

Figure 3 is a sectional view along line 3-3;

Figure 4 is a series of curves showing the theoretical and experimental equilibration of the carbon dioxide and oxygen atmosphere in a container according to the invention in the presence of fresh strawberries;

Figure 5 is a series of similar curves for strawberries stored in containers not according to the invention.

Figure 6 is a series of curves for mushrooms stored in containers according to and not according to the invention;

The following table records published respiration rates and optimum storage conditions for several popular types of produce:

Table 1

| | Respiration Rate* | | Desired Atmosphere (Vol %) | |
|---|---|---|---|---|
| | 4°C | 21°C | $O_2$ | $CO_2$ |
| Lettuce, head | 8.5 | 28 | 1-5 | 0 |
| Tomato, mature-green | 3.4 | 18 | 3-5 | 0-3 |
| Banana, ripening | | 44 | 2-5 | 2-5 |
| Avocado | 13 | 107 | 2-5 | 3-10 |
| Peach | 3.9 | 41 | 1-2 | 5 |
| Cherry, sweet | 6.0 | 15 | 3-10 | 10-12 |
| Strawberry | 13 | 76 | 10 | 15-20 |
| Asparagus | 42 | 113 | 21 | 5-14 |
| Mushroom | 36 | 148 | 6-10 | 10-15 |
| Broccoli (main stems + florets) | 50 | 158 | 1-2 | 5-10 |

*Ref: USDA Handbook 66; assume rate @ normal atmosphere. Rate is $cm^3$ of $O_2$ per kg per hr.

Taking into consideration the respiration characteristics of the produce to be packaged and the optimum $CO_2/O_2$ ratio required to retard its maturation, it is possible to design a container according to the invention for packaging any produce in substantially any quantity.

The ability to control the atmosphere within the container is derived not only from the ability to adjust the area of the permeable plastic membrane that allows communication between the interior and exterior of the container, but also to provide plastic membranes that have relatively high permeance values and therefore provide the necessary flexibility to adapt to a variety of produce. Virtually all thin films of synthetic resin are somewhat permeable by oxygen or carbon dioxide, as shown by known atmosphere-limiting packaging systems, and they may have $CO_2/O_2$ permeance ratios of 1/1 and higher. However, an essentially monolithic and continuous sheet of film is not usually sufficiently permeable to allow the flexibility and precise control of the $CO_2/O_2$ ratio in the atmosphere that is required for optimum retardation of the maturation process, at least without using excessively large panel area/product weight ratios that make the package unduly cumbersome. Thus, the film must be selected to have a permeability sufficient to allow the type of control required within a reasonable time and an area suitable for the amount of produce being packaged.

Since the panel size required varies inversely with the permeability of the membrane, panels with excessively great permeance, that is, greater than about 465,000,000 $cm^3/m^2$-day-atmosphere (30,000,000 $cm^3/100in^2$-day-atmosphere), may have to be so small that they would be difficult to install in a package. If the permeance is less than about 77,500 $cm^3/m^2$-day-atmosphere (5,000 $cm^3/100in^2$-day-atmosphere), the size of the panel may be so large as to be greater than the practical size of the container.

Microporous films and the preparation thereof are known in the art. They can be prepared, for example, by casting a sheet of a mixture of the polymer highly loaded with a filler material and drawing the resultant sheet under orienting conditions to effect orientation of the polymer along its longitudinal and transverse axes. At orienting temperatures, the polymer pulls away from the filler material causing voids and pores to form in the film matrix. The degree of permeability that results is a function of the amount of filler in the polymer, the amount of draw imposed upon the polymer and the temperature at which the drawing is carried out.

A large number of inorganic materials have been shown to be effective as fillers for effecting the voiding and pore formation. These include, e.g., various types of clay, barium sulfate, calcium carbonate, silica, diatomaceous earth and titania. Some particulate organic polymers that are higher melting than the matrix polymer, are also useful fillers, such as polyesters, polyamides and polystyrene.

A particularly useful membrane having the correct porosity characteristics for use in the container of this invention as defined above is a microporous film based on polypropylene comprised of about 40 to 60% of a propylene polymer mixture and 60 to 40% of calcium carbonate, biaxially oriented at a temperature between about 130 and 150°C. The propylene polymer mixture comprises about 45 to 55% propylene homopolymer and about 55 to 45% of a propylene/ethylene copolymer containing about 2 to 5% ethylene by weight.

Other film-forming synthetic resins can also be used for the permeance-controlling membrane of the invention. In fact, optimum control of the atmosphere inside the container can be achieved by installing two separate panels of widely different $CO_2/O_2$ permeance ratios, for example, a microporous film having a $CO_2/O_2$ permeability ratio of 1:1 and a membrane having a higher ratio such as 4 to 1 or 8 to 1.

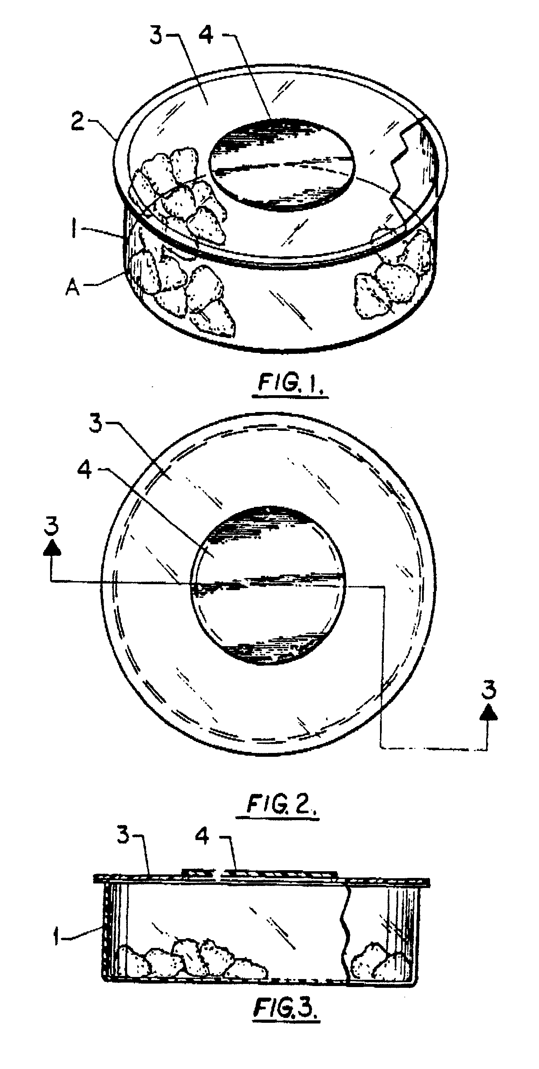

The controlled atmosphere container A shown in Figures 1 to 3 consists of a substantially impermeable body portion 1 and a lid 2 comprising a solid substantially impermeable area 3 and a permeable control panel 4. (Although the panel is located on the lid in the embodiment shown, it could be located at any point on the package where it will not be covered by other containers when they are stacked or packed for shipment).

The container can be of any appropriate size, e.g., from as small as 100 $cm^3$ up to several liters or more. The material of construction of the container is not critical so long as the entire container is impermeable to moisture and substantially impermeable to air except in the control panel area. By "substantially impermeable" is meant a permeability so low that, if the container is sealed with produce inside (without any permeable membrane), the oxygen in the container will be completely exhausted or the oxygen level would equilibrate at such a low level that anaerobic deterioration would occur. Thus glass, metal or plastic can be employed. Plastic materials such as heavy gauge polyolefins, poly(vinyl chloride), or polystyrene are preferred. The plastic materials should be substantially impermeable due to their thickness, but any minor degree of permeability may be taken into account when sizing the panel.

Control of the atmosphere within the container is achieved by proper sizing of the permeable control panel relative to the mass of produce, the free gas space within the filled container, the respiration rate of the produce and the permeability characteristics, i.e., flux rate and $CO_2/O_2$ ratio of the the membrane. If the proper relationship between these variables is achieved, a steady state at the desired relative concentration of $CO_2$ and $O_2$ ratio can be reached within about a day or less.

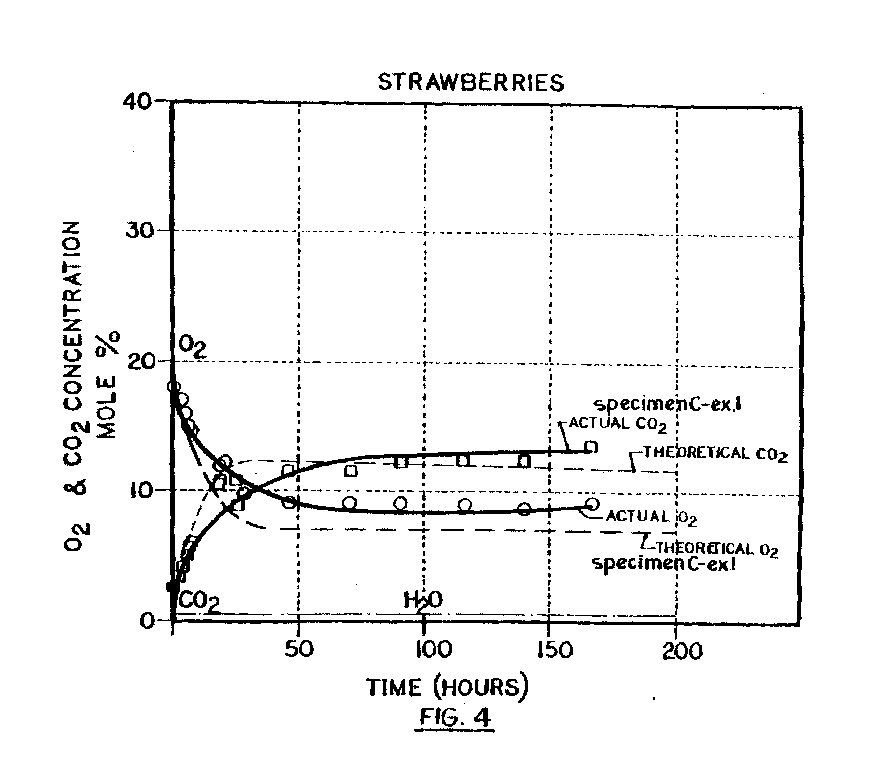

The theoretical curves of Figure 4 illustrate the establishment of this steady state for one pound of strawberries, stored at 4°C in a container made of 358.7cm$^2$ (55.6 in$^2$) of 0,254 mm (10 mil) polystyrene (of which the $CO_2$ permeability constant of 690 cm$^3$-mm/m$^2$-day-atmosphere (1753 cm$^3$ mil/100 in.$^2$-day-atmosphere) and $O_2$ permeability constant of 172.8 cm$^3$-mm/m$^2$-day-atmosphere (439 cm$^3$ mil/100 in$^2$-day-atmosphere) are not substantial enough to affect the operative values used). The container has a 177.4 cm$^2$ (27.5 in$^2$) lid made of 0.0254 mm (1 mil) polyethylene terephthalate (PET) (typically having minor $CO_2$ and $O_2$ permeabilities of 11.2 and 2.3 cm$^3$-mm/m$^2$ -day-atmosphere (28.4 and 5.8 cm$^3$ mil/100 in.$^2$/day/atmosphere) respectively, on which a 9.68 cm$^2$ (1.5 in$^2$) opening is covered by 0.0254 mm microporous polypropylene film.

The $O_2$ and $CO_2$ permeances are both 2,325,000, so the $CO_2/O_2$ permeability ratio of the microporous membrane is 1/1. The rigid container contains room air at time zero and has 425 cm$^3$ of free gas space. It is assumed that the strawberry respiration rate is 12.8 cm$^3$ $O_2$/kg-hr in room air and varies linearly with the oxygen content of the container, going through zero. Steady state conditions are achieved as described in the following paragraphs.

Oxygen in the container is consumed by the produce as it respires. An approximately equal amount of carbon dioxide is generated. The reduction in oxygen concentration and buildup of carbon dioxide concentration creates a driving force for oxygen to enter and carbon dioxide to exit the container according to the equation:

Flux across film =

$$\frac{\text{Permeability X Area}}{\text{Thickness}} \text{(Driving Force)}$$

where the driving force is the difference in the gas concentrations within the container and in the room air.

Initially the driving force is low and flux across the film is not sufficient to replace the oxygen that is consumed and drive out most of the carbon dioxide that is generated. Thus, inside the container the oxygen content decreases and the carbon dioxide content increases. The decrease in oxygen in the container also causes a decrease in the strawberries respiration rate. As the strawberries continue to respire, oxygen is consumed, carbon dioxide is generated, respiration rate decreases and the driving forces to replace the oxygen and drive out the carbon dioxide increase. Thus, the fluxes of oxygen and carbon dioxide through the film increase. The combination of these processes proceeds to the point where the consumption of oxygen is equal to the replacement of oxygen in the container by permeation through the film. At this point, a steady state is reached. The approach to steady state is demonstrated by the data in the Tables 2 and 3.

10    At this point, a steady state is reached.  The approach to steady state
      is demonstrated by the data in the Tables 2 and 3.

## Table 2

| Time Increment hr. | Oxygen Consumed $cm^3$ | Oxygen in Container $cm^3$ | Oxygen in Container % | Driving Force[a] atm | Oxygen Permeated into Container $cm^3$ |
|---|---|---|---|---|---|
| 0      0.5 | 5.59 | 86.4 | 20.3 | 0.007 | 0.08 |
| 0.5    1.0 | 5.41 | 83.7 | 19.7 | 0.013 | 0.16 |
| 10    10.5 | 3.27 | 51.1 | 12.0 | 0.090 | 1.21 |
| 20    20.5 | 2.41 | 37.9 | 8.9 | 0.122 | 1.63 |
| 30    30.5 | 2.09 | 32.9 | 7.7 | 0.134 | 1.79 |
| at steady state | 1.88 | 30.6 | 7.2 | 0.140 | 1.88 |

a) Driving force = 0.21 - $\frac{\text{% Oxygen in Container} \times \text{Pressure in Container}}{100}$

Pressure in container = 1 atmosphere.

Table 3

| Time Increment hr. | Carbon Dioxide Generated cm³ | Carbon Dioxide in Container cm³ | Carbon Dioxide in Container % | Driving Force atm | Carbon Dioxide Permeated Out of Container cm³ |
|---|---|---|---|---|---|
| 0 - 0.5 | 5.59 | 2.9 | 0.67 | 0.007 | 0.11 |
| 0.5 - 1.0 | 5.41 | 5.6 | 1.31 | 0.013 | 0.21 |
| 10 - 10.5 | 3.27 | 37.1 | 8.72 | 0.087 | 1.43 |
| 20 - 20.5 | 2.41 | 48.5 | 11.4 | 0.113 | 1.86 |
| 30 - 30.5 | 2.09 | 51.7 | 12.2 | 0.120 | 1.98 |
| at steady state | 1.88 | 49.9 | 11.8 | 0.114 | 1.88 |

b) Driving Force = $\dfrac{\text{Carbon Dioxide in Container} \times \text{Pressure in Container}}{100}$ - 0

Pressure in container   1 atmosphere.

In this illustration, the time to steady state is on the order of 40 to 50 hours. Shorter times can easily be achieved by either pre-purging the container with the final gas composition or decreasing the free gas space by proper package design, as demonstrated by the following explanation.

If one panel of film that has a $CO_2/O_2$ permeability ratio of 1/1 (which is normal for microporous film) is used, the sum of the $CO_2$ and $O_2$ concentrations, in volume percent, will always be 21%. This is because, as one mole of oxygen is consumed, one mole of carbon dioxide is generated; the driving forces for oxygen replacement and carbon dioxide expulsion are always equal and the film allows equal portions of each gas to permeate.

If the overall $CO_2/O_2$ permeability ratio is greater than 1/1, the sum of the $CO_2$ and $O_2$ concentrations, in volume percent, will always be less than 21%, since more carbon dioxide than oxygen will permeate. The sum can be determined once the variables affecting it are specified, such as film permeance, area $CO_2/O_2$ ratio and produce weight.

The following examples were carried out using a prototype CAP device comprised of a glass vessel having a hermetically sealable lid with an opening of a preselected size therein. This opening was covered with a panel of the material to be tested. The device was also fitted with a tap for taking samples of the atmosphere within the device.

Example 1

A series of tests of the container according to the invention were carried out with about 550 grams of strawberries stored at 4°C. Strawberries (as reported in Table 1 above) respire relatively slowly and are optimally maintained in an atmosphere of about 10% oxygen and 10 to 20% carbon dioxide. In four experiments an opening in the lid having an area of 6.45 cm² (one in²) was covered with:

A) A microporous polypropylene film having a permeance greater than 465,000,000 cm³/m²-day-atmosphere (30,000,000 cm³/100in²-day-atmosphere);

B) A porous polypropylene film having an oxygen permeance of about 186,000 cm³/m²-day-atmosphere (12,000 cm³/100in²-day-atmosphere);

C) A porous polypropylene film having an oxygen permeance of about 2,170,000 cm³/m²-day-atmosphere (40,000 cm³/100in²-day-atmosphere); and

D) An opaque homopolypropylene film loaded with about 20% $CaCO_3$ having a permeance of about 4650 cm³/m²-day-atmosphere (300 cm³/100 in²-day-atmosphere).

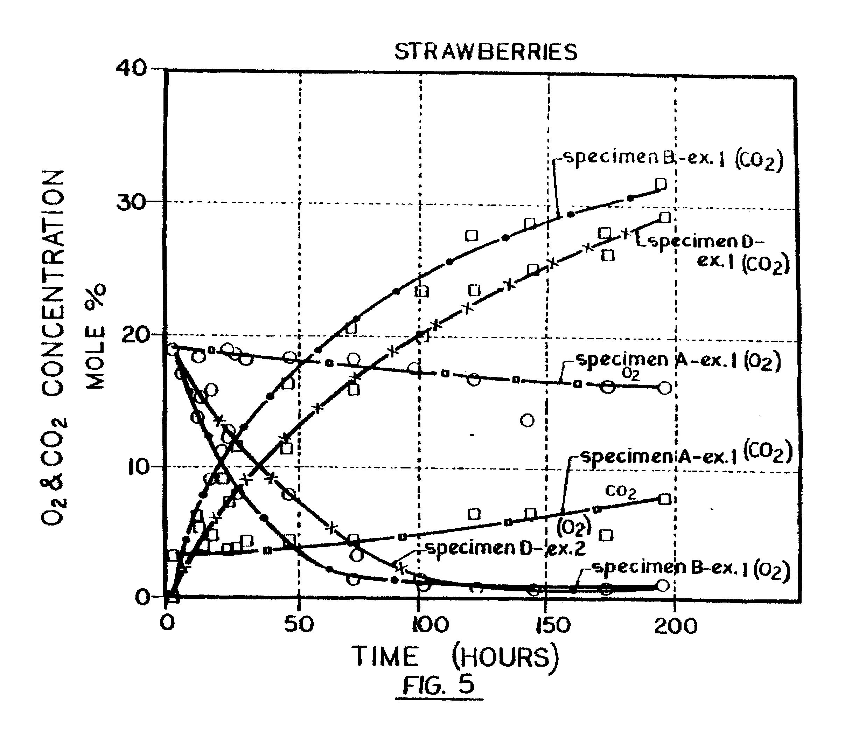

The atmosphere in the container was sampled periodically by means of a gas chromotography syringe and the carbon dioxide and oxygen content determined by gas chromotography. In Figure 4 the carbon dioxide and oxygen content of specimen C are plotted against time, along with the theoretical curve for strawberries discussed hereinabove. Agreement with the theoretical curve is good. Curves for the other three cases are plotted in Figure 5.

At the end of the test period, the berries were inspected for visual appeal and edibility with the following results:

Specimen A - berries were brown in color, had very noticeable off odor. Not edible. In this instance, the film was so highly permeable that no significant control of $CO_2/O_2$ ratio was established.

Specimen B - berries looked good; had good red color, but had noticeable bad odor. Not considered edible. In this instance, the film was not sufficiently $O_2$ permeable and an anaerobic condition was created.

Specimen C - berries looked good, had good red color and pleasant fresh strawberry odor. Considered edible. This case demonstrates that control is possible and that good results are thereby achieved.

Specimen D - berries looked good, but were not considered edible due to off odor. The impermeability of the elements of this container created an anaerobic condition.

Example 2

Another series of tests was carried out with about 460 grams of mushrooms stored at 4°C. Mushrooms are optimally maintained in an atmosphere of about 6% oxygen and 15% carbon dioxide. In these experiments, a 25.8 cm² (4 in²) opening was covered with:

A) a porous polypropylene film having a permeance greater than 465,000,000 cm³/m²-day-atmosphere (30,000,000 cm³/100in²-day-atmosphere); and

B) a porous polypropylene film having a permeance of about 1,860,000 cm³/m²-day-atmosphere (120,000 cm³/100in²-day-atmosphere).

A third portion of mushrooms (specimen C) was packaged in a substantially impermeable container without the control panel.

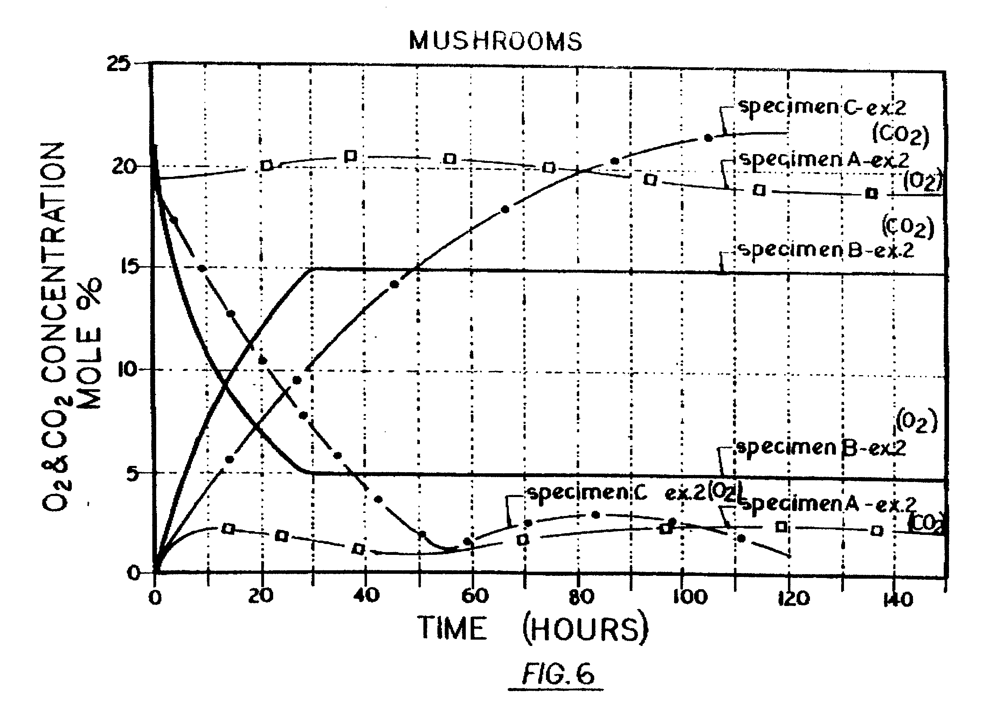

The atmosphere in the container, maintained at 4°C, was sampled periodically and the carbon dioxide and oxygen content plotted against time as in Example 1. These curves are shown in Figure 6. In the curves it can be seen that in the package identified as A, no control over the atmosphere was effected, whereas in package B, after about 30 hours, the atmosphere reached a steady state at about 5% oxygen and about 15% carbon dioxide. In package C, with no provision for oxygen entering or carbon dioxide exit, the $CO_2/O_2$ ratio was essentially reversed after about 60 hours and remained at that point.

At the end of the test period, the mushrooms were inspected for visual appeal and edibility with the following results:

Specimen A mushrooms were completely rotted;

Specimen B mushrooms retained their original creamy white color, had no off-odor and were considered edible.

Specimen C mushrooms looked good and had no off-odor, but were inedible due to the essentially anaerobic condition existing in the container.

Example 3

A series of tests of the device were carried out with 50 g of detached broccoli florets stored at 4° C. Optimum atmospheric conditions for storing whole broccoli are reported to be 1 to 2% oxygen and 5 to 10% carbon dioxide (see Table 1). (Optimum gas compositions for extending the shelf life of broccoli florets have not been clearly defined in the literature). In these experiments a 25.8 cm² (4 in²) opening in the lid was covered with:

A) a PVC film having with an oxygen permeance of 38,750 cm³/m²-day-atmosphere (2500 cm³/100 in²-day-atmosphere and a carbon dioxide permeance of 186,000 cm³/m²-day-atmosphere (120,000 cm³/100 in²-day-atmosphere).

B) a porous polypropylene film having an oxygen permeance of 7,362,500 cm³/m²-day-atmosphere (475,000 cm³/100 in²-atmosphere-day) and a carbon dioxide permeance of 8,215,000 cm³/m²day-atmosphere (530,000 cm³/100 in²-day-atmosphere.

C) an impermeable barrier.

A fourth portion of broccoli florets (Specimen D) were stored uncovered in air at 4° C.

The atmosphere in the containers was sampled periodically over an 8 to 13 day period by means of a gas chromotography syringe and the carbon dioxide and oxygen content were determined by gas chromatography. Twelve days were required for the carbon dioxide and oxygen contents of Specimen A to reach steady state at 9% and 2.5%, respectively. The gas composition of Specimen B reached steady state at 4% carbon dioxide and 17% oxygen after 2 days. Carbon dioxide content in Specimen C was greater than 20% and the oxygen content was 1% after 3 days storage.

At the end of eight days, broccoli florets were inspected for visual appeal and edibility with the following results:

Specimen A - Florets had lightened in color, had softened in texture and exhibited a very objectionable sulfur off-odor, which made the vegetable organoleptically undesirable.

Specimen B - Florets were a rich dark green color and had no off-odor. The vegetable had a pleasant, fresh flavor, and a crisp texture. No objectionable odor was noticeable beyond that normally associated with broccoli.

Specimen C - Floret color had lightened and an objectionable sulfur odor was present. Not edible.

Specimen D - Florets were dessicated and their stems had lost their normal firmness. Not edible.

A similar experiment using 500 g of detached broccoli florets and a 6.45 cm² control membrane of a porous polypropylene film having a permeance of 465,000,000 cm³/m²-day-atmosphere (30,000,000 cm³/100in²-day-atmosphere) preserved the florets in good condition. A further experiment using 500 g of detached broccoli florets and a 6.45 cm² control membrane of a porous polypropylene film having a permeance of 620,000,000 cm³/m²-day-atmosphere (40,000,000 cm³/100in²-day-atmosphere) showed no control of the atmosphere in the container and failed to preserve edibility for 14 days.

**Claims**

1. A container capable of creating within it a preselected carbon dioxide and oxygen concentration in the presence of respiring fresh fruit, vegetables or flowers, that is constructed of a substantially gas-impermeable material having a gas-permeable panel in one or more its walls to provide a controlled flow or flux of $CO_2$ and $O_2$ through its walls, characterized in that the panel is a microporous plastic membrane having an oxygen permeance between 77,500 and 465,000,000 cm³/m²-day-atmosphere, the permeance and area of the membrane being such as to provide a flux of $O_2$ approximately equal to the predicted $O_2$ respiration rate of the enclosed fruit, vegetable or flower, and the carbon dioxide permeance of the membrane being such as to maintain the desired optimum ratio of carbon dioxide to oxygen, wherein the selected film has a permeability sufficient to allow the type of control of the atmosphere required.

2. A container as claimed in claim 1, further characterized in that the microporous membrane has a permeance between about 310,000 and 13,950,000 cm³/m²-day-atmosphere.

3. A container as claimed in claim 1 or 2, further characterized in that the microporous membrane is an oriented film comprised of a blend of a propylene homopolymer and a propylene-ethylene copolymer having an ethylene-moity concentration of 2 to 5% by weight.

4. A container as claimed in claim 1, 2, or 3, further characterized in that the microporous membrane has a carbon dioxide to oxygen permeance ratio of about 1 to 1.

5. A container as claimed in any of the preceeding claims, further characterized in that the microporous membrane is filled with 40 to 60% calcium carbonate, based on the total weight of the film.

6. A container as claimed in any of the preceeding claims, further characterized in that it has two permeable control membranes having different $CO_2/O_2$ permeance ratios.

7. A container as claimed in any of the preceeding claims, further characterized in that the $CO_2/O_2$ permeance ratios are in the range of 1 to 1 to 8 to 1 inclusive.

8. A container as claimed in any of the preceeding claims, further characterized in that the permeance and area of the membrane is such as to provide a flux of $O_2$ approximately equal to the predicted $O_2$ respiration rate of not more than 1.5 kg of enclosed fruit, vegetable or flower, and the carbon dioxide permeance of the membrane being such as to maintain the desired optimum ranges of carbon dioxide and oxygen for not more than the said 1.5 kg of enclosed produce.

**Revendications**

1. Récipient pouvant créer à l'intérieur de lui-même une concentration prédéterminée de gaz carbonique et d'oxygène en présence de fruits, de légumes au de fleurs frais respirant, qui est construit à partir d'un matériau essentiellement imperméable aux gaz ayant sur une ou plusieurs de ses parois un panneau perméable aux gaz de façon à permettre à un écoulement ou flux contrôlé de $CO_2$ et $O_2$ à travers ses parois, caractérisé en ce que le panneau est une membrane plastique microporeuse ayant une perméabilité à l'oxygène comprise entre 77 500 et 465 000 000 cm³/m²-jour-atmosphère. la perméabilité et la superficie de la membrane étant telles que l'on obtient un flux de $O_2$ approximative-ment égal au taux de respiration d'oxygène prévu pour le fruit, le légume au la fleur enferme, et la perméabilité au gaz carbonique de la membrane étant telle que l'on maintient le rapport optimum désiré du gaz carbonique à l'oxygène, le film choisi ayant une perméabilité suffisante pour permettre le type de contrôle de l'atmosphère nécessaire.

2. Récipient selon la revendication 1, caractérisé en outre en ce que la membrane microporeuse a une perméabilité comprise entre environ 310 000 et 13 950 000 cm³/m²-jour-atmosphère.

3. Récipient selon la revendication 1 ou 2, caractérisé en outre en ce que la membrane microporeuse est un film orienté comprenant un mélange d'un homopolymère de propylène et d'un copolymère propylène/éthylène ayant une concentration en motifs éthylène de 2 à 5% en poids.

4. Récipient selon la revendication 1, 2 au 3, caractérisé en outre en ce que la membrane microporeuse a un rapport de perméabilité du gaz carbonique à l'oxygène d'environ 1 à 1.

5. Récipient selon l'une quelconque des revendications précédentes, caractérisé en outre en ce que la membrane microporeuse est chargée de 40 à 60% de carbonate de calcium, par rapport au poids total du film.

6. Récipient selon l'une quelconque des revendications précédentes, caractérisé en outre en ce qu'il comporte deux membranes de contrôle permeables ayant des rapports de perméabilité $CO_2/O_2$ différents.

7. Récipient selon l'une quelconque des revendications précédentes, caractérisé en outre en ce que les rapports de perméabilité $CO_2/O_2$ sont compris entre 1 : 1 à 8 : 1, valeurs limites comprises.

8. Récipient selon l'une quelconque des revendications précédentes, caractérisé en outre en ce que la perméabilité et la superficie de la membrane sont telles que l'on obtient un flux de $O_2$ approximativement égal au taux de respiration de $O_2$ prévu de pas plus de 1,5 kg de fruits, légumes au fleurs enfermés, et la perméabilité au gaz carbonique de la membrane étant telle que l'on maintient les intervalles optimums désirés de gaz carbonique et d'oxygène pour pas plus dudit 1,5 kg de produit enfermé.

**Patentansprüche**

1. Behälter, der in sich eine vorgewählte Kohlendioxid- und Sauerstoffkonzentration in Anwesenheit von atmenden frischen Früchten, Gemüse oder Blumen schaffen kann, gebildet aus einem im wesentlichen gasundurchlässigen Material, das ein gasdurchlässiges Feld in einer oder mehreren seiner Wände aufweist, um einen kontrollierten Strom oder Fluß von $CO_2$ und $O_2$ durch seine Wände zu liefern, dadurch gekennzeichnet, daß das Feld eine mikroporöse Plastikmembran ist, die eine Sauerstoffdurchlässigkeit zwischen 77.500 und 465.000.000 cm³/m²-Tag-Atmosphäre aufweist, wobei die Durchlässigkeit und die Fläche der Membran derart sind, daß sie einen $O_2$-Fluß liefern, der etwa gleich der vorhergesagten $O_2$-Atmungsgeschwindigkeit der enthaltenen Früchte, Gemüse oder Blumen ist und die Kohlendioxiddurchlässigkeit der Membran derart ist, daß das gewünschte optimale Verhältnis von Kohlendioxid zu Sauerstoff aufrechterhalten wird, wobei der ausgewählte Film eine Permeabilität aufweist, die ausreicht, um die Art der benötigten Kontrolle der Atmosphäre zu ermöglichen.

2. Behälter nach Anspruch 1, weiter dadurch gekennzeichnet, daß die mikroporöse Membran eine Durchlässigkeit zwischen etwa 310.000 und 13.950.000 cm³/m²-Tag-Atmosphäre aufweist.

3. Behälter nach Anspruch 1 oder 2, weiter dadurch gekennzeichnet, daß die mikroporöse Membran ein orientierter Film aus einer Mischung eines Propylenhomopolymers und eines Propylenethylencopolymers, das eine Ethylenanteil-Konzentration von 2 bis 5 Gew.-% aufweist, ist.

4. Behälter nach Anspruch 1, 2 oder 3, weiter dadurch gekennzeichnet, daß die mikroporöse Membran ein Kohlendioxid- zu Sauerstoff-Durchlässigkeit-Verhältnis von etwa 1 zu 1 aufweist.

5. Behälter nach einem der vorhergehenden Ansprüche, weiter dadurch gekennzeichnet, daß die mikroporöse Membran mit 40 bis 60% Kalziumcarbonat, bezogen auf das Gesamtgewicht des Films, gefüllt ist.

6. Behälter nach einem der vorhergehenden Ansprüche, weiter dadurch gekennzeichnet, daß er zwei durchlässige Kontrollmembranen mit unterschiedlichen $CO_2/O_2$-Durchlässigkeit-Verhältnissen aufweist.

7. Behälter nach einem der vorhergehenden Ansprüche, weiter dadurch gekennzeichnet, daß die $CO_2/O_2$-Durchlässigkeit-Verhältnisse im Bereich von 1 zu 1 bis 8 zu 1 einschließlich liegen.

8. Behälter nach einem der vorhergehenden Ansprüche, weiter dadurch gekennzeichnet, daß die Durchlässigkeit und die Fläche der Membran derart sind, daß sie einen $O_2$-Fluß liefern, der etwa gleich der vorhergesagten $O_2$-Atmungsgeschwindigkeit von nicht mehr als 1,5 kg enthaltener Früchte, Gemüse oder Blumen ist und die Kohlendioxiddurchlässigkeit der Membran derart ist, daß die gewünschten optimalen Bereiche von Kohlendioxid und Sauerstoff für nicht mehr als die 1,5 kg des enthaltenen Produkts aufrechterhalten wird.

FIG. 1.

FIG. 2.

FIG. 3.

STRAWBERRIES

FIG. 4

EP 0 270 764 B1

STRAWBERRIES

FIG. 5

EP 0 270 764 B1

MUSHROOMS

FIG.6